Europäisches Patentamt

European Patent Office

Office européen des brevets

(11) Veröffentlichungsnummer : **0 092 277**
**B1**

(12) **EUROPÄISCHE PATENTSCHRIFT**

(45) Veröffentlichungstag der Patentschrift :
09.09.87

(51) Int. Cl.⁴ : **A 47 J 36/38, A 47 J 36/06**

(21) Anmeldenummer : 83200523.5

(22) Anmeldetag : 13.04.83

(54) Deckelförmiger Rückflusskondensator für Kochgefässe.

(30) Priorität : 15.04.82 DE 3213852

(43) Veröffentlichungstag der Anmeldung :
26.10.83 Patentblatt 83/43

(45) Bekanntmachung des Hinweises auf die Patenterteilung : 09.09.87 Patentblatt 87/37

(84) Benannte Vertragsstaaten :
AT BE CH DE FR GB LI NL

(56) Entgegenhaltungen :
DE-A- 2 834 841
DE-A- 2 931 824
DE-C-    36 158
DE-C-    79 924
FR-A- 2 447 174
US-A- 4 304 106

(73) Patentinhaber : Philips Patentverwaltung GmbH
Billstrasse 80
D-2000 Hamburg 26 (DE)
DE
N.V. Philips' Gloeilampenfabrieken
Groenewoudseweg 1
NL-5621 BA Eindhoven (NL)
BE CH FR GB LI NL AT

(72) Erfinder : Schröder, Johann, Dr.
Adenauerallee 125a
D-5100 Aachen (DE)

(74) Vertreter : Piegler, Harald, Dipl.-Chem. et al
Philips Patentverwaltung GmbH Billstrasse 80 Postfach 10 51 49
D-2000 Hamburg 26 (DE)

**Beschreibung**

Die Erfindung betrifft einen deckelförmigen Rückflußkondensator für Kochgefäße, insbesondere Kochtöpfe.

Ein derartiger Rückflußkondensator ist aus der DE-C-36 158 bekannt. Er besteht aus einem Deckel, in dem Kühlkanäle angeordnet sind, in welchen von einem Deckelscharnier aus ein- und abgeleitetes Kühlwasser umläuft. Das die Kühlkanäle durchströmende Wasser kühlt die untere Fläche des Deckels ab, so daß sich die emporsteigenden Dämpfe an derselben kondensieren und in Tropfen wieder in die kochende Masse zurückfallen. Auf diese Weise wird nicht nur das Austreten unangenehmer oder schädlicher Dämpfe vermieden, sondern auch das eventuelle Entweichen nutzbringender Bestandteile der gekochten Masse verhindert. Der bekannte Deckel hat den Nachteil, daß er laufend frisches Kühlwasser braucht und eine aufwendige Konstruktion der Anschlüsse für die Kühlkanäle erfordert. Ferner treten an den Anschlüssen Abdichtungsprobleme auf. Außerdem ist der Wirkungsgrad der Kühlung durch strömendes Wasser unbefriedigend.

Aus der DE-A-2 834 841 ist ein deckelförmiger Rückflußkondensator für Kochgefäße bekannt. Der Rückflußkondensator enthält einen Wärmespeicher in Form eines Deckelteiles, der aus einem Werkstoff mit relativ hoher spezifischer Wärme besteht, wie z. B. Porzellan oder keramische, feuerfeste Masse. Der Wirkungsgrad der Kühlung durch diese Werkstoffe ist ebenfalls unbefriedigend.

Die DE-A-2 931 824 beschreibt einen Wäschetrockner, in dem Kondensatoren benutzt werden, die Hohlräume aufweisen, die mit einem bei Raumtemperatur von etwa 20° festen, bei etwa 30 bis 55° unter Einsatz einer möglichst großen Schmelzwärme sich verflüssigenden Medium gefüllt sind. Mit diesem Wäschetrockner wird ein anderer Zweck verfolgt als mit einem Rückflußkondensator : Man will das Wasser entfernen, nicht zurückführen.

Die Erfindung hat die Aufgabe, einen konstruktiv einfachen und zugleich wirkungsvollen deckelförmigen Rückflußkondensator für Kochgefäße zu schaffen.

Diese Aufgabe wird erfindungsgemäß dadurch gelöst, daß der Rückflußkondensator mindestens einen Latentwärmespeicher enthält, der aus mindestens einem Behälter besteht, der mit einem Speichermittel mit einer möglichst hohen Schmelzwärme gefüllt ist, das bei einer Temperatur zwischen 25 und 95 °C reproduzierbar schmilzt und gegebenenfalls kleine Mengen Keimbildner enthält.

Gegenstand der Erfindung ist es also, die üblichen Kochtöpfe mit einem Latentwärmespeicher abzudecken, durch den die Kochdämpfe bei Normaldruck kondensiert und der Speise im Rückfluß wieder zugeführt werden.

Der Behälter ist vorzugsweise als flacher (z. B. teller- oder diskusförmiger) Metallbehälter ausgebildet. Zweckmäßigerweise weist der Metallbehälter Hohlräume oder Ausbuchtungen zur Aufnahme von Wasserdampf und Vergrößerung der Kühlfläche auf. Es können auch mehrere Metallbehälter, die z. B. die Form von Speicherplatten aufweisen, übereinander gesetzt werden, um beim Anfall von größeren Dampfmengen noch eine ausreichende Kondensation zu gewährleisten. In diesem Falle sind die Hohlräume zwischen mindestens 2 übereinandergesetzten Metallbehältern angeordnet.

Als Speichermittel kommen solche Stoffe in Frage, die eine möglichst hohe Schmelzwärme besitzen und reproduzierbar bei einer Temperatur zwischen 25 und 95 °C schmelzen. Um eine reproduzierbare Kristallisation ohne größere Unterkühlung zu gewährleisten, können dem Speichermittel auch kleine Mengen Keimbildner zugesetzt werden.

Folgende Hydrate sind z. B. als Speichermittel sehr gut geeignet :

1. $CaCl_2 \cdot 6H_2O$ + 0,05 Gew.% $BaCO_3$     Schmelzpunkt : 29 °C
2. $NaOOCCH_3 \cdot 3H_2O$     Schmelzpunkt : 58 °C
3. $Mg(NO_3)_2 \cdot 6H_2O$     Schmelzpunkt : 89 °C

Die erforderliche Menge an Speichermittel und damit die Dimensionierung der Metallbehälter bzw. Speicherplatten richtet sich nach dem Rauminhalt und den Abmessungen des jeweiligen Kochgefäßes sowie nach der beabsichtigten Kochdauer, die z. B. für Gemüse etwa 10 bis 30 Minuten beträgt. Als Anhaltspunkt mag gelten, daß für einen handelsüblichen 2-Liter-Kochtopf 1 bis 2 kg $NaOOCCH_3 \cdot 3H_2O$ erforderlich sind. Allgemein gesagt, sollten die Dicken der mit Speichermittel gefüllten Speicherplatten vorzugsweise 0,5 bis 2 cm betragen.

Der Speicher wird automatisch wieder regeneriert, indem die beim Kondensieren des Kochdampfes aufgenommene und zum Aufschmelzen des Speichermittels verbrauchte Wärme an die kühlere Umgebung abgegeben wird. Das Speichermittel wird dabei wieder fest und für einen erneuten Kochvorgang automatisch vorbereitet.

Dieser relativ langsame Regenerierungsvorgang kann zusätzlich noch eine sehr nützliche Funktion im Haushalt übernehmen. Die heißen, durch die Schmelzwärme eine ganze Weile auf Schmelztemperatur des Speichermittels gehaltenen Platten können nämlich ohne weiteres als Warmhalteplatten verwendet werden. Die Platten sind dabei sowohl als Warmhalteuntersatz wie auch als Warmhaltedeckel für Töpfe und Schüsseln fast beliebiger Form geeignet.

Vorteile des Rückflußkondensators :

1. Keine Wasserdampfbelastung der Wohnung und entsprechende Energieersparnis.

2. Keine Geruchsbelastung der Wohnung ; Aromastoffe bleiben in der Speise.

3. Gleichzeitige Bereitstellung von Warmhalteplatten ohne zusätzlichen Arbeits- und Energieaufwand.

4. Denkbar einfache Konstruktion, Handhabung und Reinigung.

5. Für die meisten gebräuchlichen Koch- und Serviergefäße ohne weiteres verwendbar.

Einige Ausführungsbeispiele der Erfindung sind in der Zeichnung dargestellt und werden im folgenden näher beschrieben. Es zeigen

Figur 1 einen Kochtopf mit einem deckelförmigen Rückflußkondensator im Schnitt,

Figuren 2 und 3 perspektivische Ansichten eines teilweise aufgeschnittenen deckelförmigen Rückflußkondensators und

Figur 4 einen Kochtopf mit dem Rückflußkondensator nach Fig 2 und 3 im Schnitt.

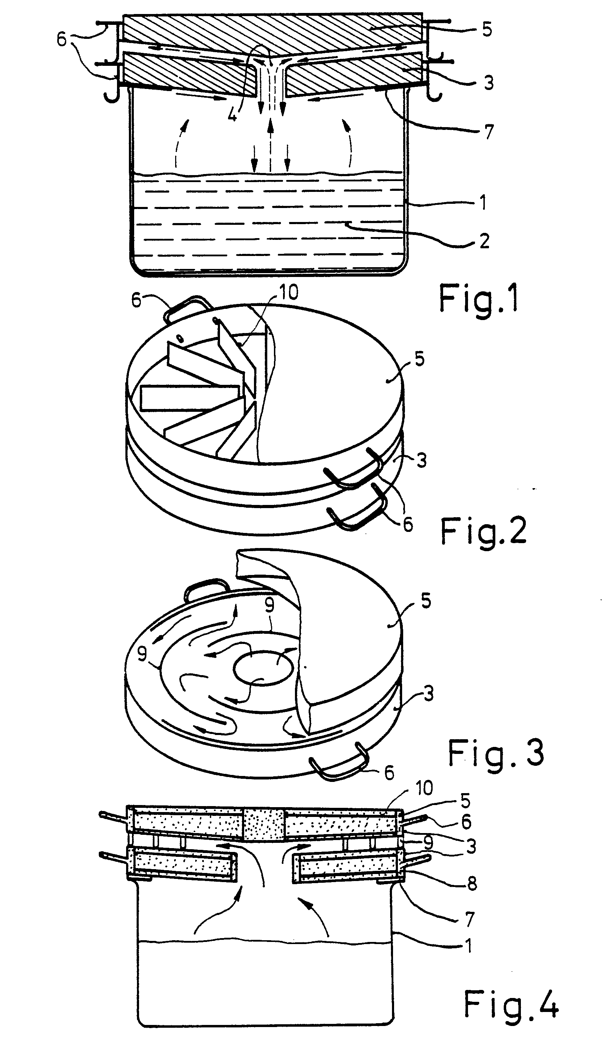

Figur 1 zeigt einen Kochtopf 1, der teilweise mit Wasser 2 und mit Speisen (nicht dargestellt), die gedünstet oder gekocht werden sollen, gefüllt ist. Der Kochtopf ist mit einer Speicherplatte 3 abgedeckt, die in der Mitte eine zylindrische durchgehende Öffnung 4 aufweist. Oberhalb der Speicherplatte 3 befindet sich noch eine zweite Speicherplatte 5 (ohne Öffnung). Das Speichermittel innerhalb der Speicherplatten ist durch Schrägschraffierung angedeutet. Die Speicherplatten sind mit mehreren Handgriffen 6 mit Standfüßen versehen. Zwischen dem Rand des Kochtopfes 1 und der unteren Speicherplatte 3 befindet sich eine Gummiauflage 7, die an der Speicherplatte 3 befestigt ist. Der sich beim Kochen oder Dünsten bildende gasförmige Wasserdampf mit Geruchsstoffen ist durch gestrichelte Pfeile angedeutet ; die durchgehend gezeichneten Pfeile deuten flüssiges Wasserkondensat mit Geruchsstoffen an.

Nach Abschluß des Kochvorgangs kann die untere Speicherplatte 3 zum Warmhalten der Speise auf dem Kochtopf 1 bleiben, während die obere Platte 5 als Warmhalteuntersatz für eine Schüssel auf dem Eßtisch dienen kann.

Als Speichermittel für den aus zwei runden Platten bestehenden Kondensator ist $CH_3COO-Na \cdot 3H_2O$ ($F_p = 58\,°C$) besonders gut geeignet, da die Speichertemperatur sowohl zur Kondensation des Kochwassers wie auch zum anschließenden Warmhalten von Servierschüsseln geeignet ist. Außerdem hat Natriumazetat eine relativ hohe Wärmekapazität von 2,79 kJ/kgK und eine Schmelzwärme von 289 KJ/dm³ und ist billig und ungiftig.

Eine Schwierigkeit ist aber seine starke Neigung zur Unterkühlung (um 20 bis 40 °C). Diese kann zwar durch $Ni_3(PO_4)_2 \cdot 8H_2O$ oder $SrC_2O_4 \cdot H_2O$ reduziert werden. Die Methode ist aber nicht zuverlässig, und aus bisher noch nicht geklärten Gründen (Alterung ? Umsetzung ?) kann diese keimbildende Wirkung teilweise oder ganz versagen.

Andere Speichermittel wie z. B. $CaCl_2 \cdot 6H_2O$ oder $Na_2HPO_4 \cdot 12H_2O$, die auch für die Verwendung in Rückflußkondensatoren geeignet sind, neigen ebenfalls zur Unterkühlung.

Um nun diese Unterkühlung auszuschließen, ist es vorteilhaft, die Speicherplatten 3 und 5, wie in Fig. 4 dargestellt, mit Griffen 6 aus Rohr zu versehen, die zum Innern der Speicherplatten hin geöffnet sind. Diese Rohrgriffe 6 sind mit Speichermittel 8 gefüllt, das in direktem Kontakt zum gleichen Speichermittel in den Platten steht. Das Speichermittel 8 ist in Fig. 4 punktiert dargestellt (also anders als in Fig. 1), um anzudeuten, daß unterschiedliche Speichermittel anwendbar sind.

Da die Griffe 6 zur Seite in die Luft ragen und nicht mit dem heißen Kochdampf in Berührung kommen, bleiben sie relativ kühl. Das Speichermittel in den Griffen wird also bei Benutzung der Platten nicht aufgeschmolzen, und die Keimbildung erfolgt ungehemmt von dieser festen Restsubstanz in den Griffrohren ausgehend über die gesamte Speicherplatte.

Außerdem dienen die Griffe 6 der bequemeren Handhabung. Damit sie auch nach sehr intensivem und langem Kochen nicht zu heiß werden, sollten sie möglichst aus dünnwandigem Rohr und thermisch schlecht leitendem Material, z. B. Cr/Ni-Stahl, gefertigt sein.

Zur besseren Wärmeübertragung vom Dampf auf die Plattenwände und damit zur besseren Kondensation wird der durch das Loch der unteren Platte strömende Dampf durch Leitbleche 9 im Spalt zwischen den beiden Platten hin und her geführt (Fig. 4 ; in Fig. 3 ist der strömende Dampf durch Pfeile angedeutet).

Zur besseren Wärmeübertragung von den Plattenwänden in das Speichermittel sind Wärmeleitbleche 10 sternförmig im Innern beider Platten angeordnet, die mit den Plattenwänden in gutem thermischen Kontakt stehen (Fig. 2 und 4).

**Patentansprüche**

1. Deckelförmiger Rückflußkondensator für Kochgefäße, dadurch gekennzeichnet, daß er mindestens einen Latentwärmespeicher enthält, der aus mindestens einem Behälter besteht, der mit einem Speichermittel mit einer möglichst hohen Schmelzwärme gefüllt ist, das bei einer Temperatur zwischen 25 und 95 °C reproduzierbar schmilzt und gegebenenfalls kleine Mengen Keimbildner enthält.

2. Rückflußkondensator nach Anspruch 1, dadurch gekennzeichnet, daß der Behälter als flacher Metallbehälter (3, 5) ausgebildet ist.

3. Rückflußkondensator nach Anspruch 1 oder 2, dadurch gekennzeichnet, daß der Metallbehälter Hohlräume (4) oder Ausbuchtungen zur Aufnahme von Wasserdampf und Vergrößerung der Kühloberfläche aufweist.

4. Rückflußkondensator nach Anspruch 3, dadurch gekennzeichnet, daß die Hohlräume (4) zwischen mindestens 2 übereinandergesetzten Metallbehältern angeordnet sind.

5. Rückflußkondensator nach Anspruch 2 bis 4, dadurch gekennzeichnet, daß die Metallbe-hälter (3, 5) mit $CaCl_2 \cdot 6H_2O$ + 0,05 Gew.% $BaCO_3$, $NaOOCCH_3 \cdot 3H_2O$ oder $Mg(NO_3)_2 \cdot 6H_2O$ als Speichermittel gefüllt sind.

6. Rückflußkondensator nach Anspruch 1 bis 5, dadurch gekennzeichnet, daß die Dicken der als Latentwärmespeicherplatten ausgebildeten Metallbehälter (3, 5) etwa 0,5 bis 2 cm betragen.

7. Rückflußkondensator nach Anspruch 2 bis 6, dadurch gekennzeichnet, daß die Metallbehälter (3, 5) mit hohlen Griffen (6) versehen sind, deren Hohlraum zum Innern der Metallbehälter (3, 5) geöffnet und mit Speichermittel (8) gefüllt ist.

8. Rückflußkondensator nach Anspruch 2 bis 7, dadurch gekennzeichnet, daß die Metallbehälter (3, 5) derart ausgebildet sind, daß sie nach Abschluß des Kochvorgangs als Warmhalteplatten verwendbar sind.

## Claims

1. A lid-sloped reflux condenser for cooking containers, characterized in that it comprises at least one latent heat accumulator consisting of at least one container which is filled with a heat storage material having a heat of fusion which is as high as possible and melting reproducibly at a temperature between 25 and 95 °C and optionally contains small qualities of nucleating agent (3, 5).

2. A reflux condenser as claimed in Claim 1, characterized in that the container is a flat metal container (3, 5).

3. A reflux condenser as claimed in Claim 1 or 2, characterized in that the metal container comprises cavities (4) or bulges for receiving water vapour and for increasing the cooling area.

4. A reflux condenser as claimed in Claim 3, characterized in that the cavities (4) are provided between at least 2 metal holders placed one on top of the other.

5. A reflux condenser as claimed in Claims 2 to 4, characterized in that the metal containers (3, 5) are filled with $CaCl_2 \cdot 6H_2O$ + 0,05 % by weight $BaCO_3$, $NaOOCCH_3 \cdot 3H_2O$ or Mg $(NO_3)_2 \cdot 6H_2O$ as a heat storage material.

6. A reflux condenser as claimed in Claims 1 to 5, characterized in that the metal containers (3, 5) constructed as latent heat accumulating plates are approximately 0.5 to 2 cm thick.

7. A reflux condenser as claimed in Claims 2 to 6, characterized in that the metal containers (3, 5) comprise hollow handles (6) the hollow space of which is open towards the interior of the metal containers (3, 5) and is filled with heat storage material (8).

8. A reflux condenser as claimed in Claims 2 to 7, characterized in that the metal containers (3, 5) are constructed so that after termination of the cooking process they may be used as platewar-mers.

## Revendications

1. Couvercle-condenseur de vapeur pour récipients de cuisson, caractérisé en ce que le condensateur à reflux contient au moins un accumulateur de chaleur latente qui est constitué au moins par un récipient, qui est rempli de moyens accumulateurs présentant une chaleur de fusion spécifique aussi élevée que possible, qui fond, de façon reproductible, à une température comprise entre 25 et 95° et, le cas échéant, contient de petites quantités de formateur de germes.

2. Condensateur à reflux selon la revendication 1, caractérisé en ce que le récipient est sous forme d'un récipient métallique plan (3, 5).

3. Condensateur à reflux selon la revendication 1 ou 2, caractérisé en ce que le récipient métallique présente des espaces creux (4) ou des évidements pour la réception de vapeur d'eau et l'agrandissement de la surface de refroidissement.

4. Condensateur à reflux selon la revendication 3, caractérisé en ce que les espaces creux (4) sont prévus entre au moins deux récipients métalliques superposés.

5. Condensateur à reflux selon les revendications 2 à 4, caractérisé en ce que les récipients métalliques (3, 5) sont remplis de $CaCl_2 \cdot 6H_2O$ + 0,05 % en poids de $BaCO_3$, $NaOOCCH_3 \cdot 3H_2O$ ou $Mg(NO_3)_2 \cdot 6H_2O$ comme matériau accumulateur de chaleur.

6. Condensateur à reflux selon les revendications 1 à 5, caractérisé en ce que l'épaisseur des récipients métalliques (3, 5), qui sont sous forme de plaques accumulatrices de chaleur latentes, est d'environ 0,5 à 2 cm.

7. Condensateur à reflux selon la revendication 2 à 6, caractérisé en ce que les récipients métalliques (3, 5) sont munis de poignées creuses (6), dont l'espace creux est ouvert vers l'intérieur des récipients métalliques (3, 5) et sont remplis de matériau accumulateur de chaleur (8).

8. Condensateur à reflux selon la revendication 2 à 7, caractérisé en ce que les récipients métalliques (3, 5) sont réalisés de façon à pouvoir être utilisés comme chauffe-plats après le proces-sus de cuisson.

Fig.1

Fig.2

Fig. 3

Fig.4